(19)

Europäisches
Patentamt
European
Patent Office
Office européen
des brevets

(11) **EP 2 713 616 A1**

(12) **EUROPEAN PATENT APPLICATION**

(43) Date of publication:
**02.04.2014 Bulletin 2014/14**

(51) Int Cl.:
**H04N 19/00** (2014.01)

(21) Application number: **12250155.4**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **British Telecommunications public limited company**
**London EC1A 7AJ (GB)**

(72) Inventor: **The designation of the inventor has not yet been filed**

(74) Representative: **Lau, Chi-Fai et al**
**BT Group Legal**
**Intellectual Property Department**
**PP C5A, BT Centre**
**81 Newgate Street**
**London**
**EC1A 7AJ (GB)**

(54) **Perceptually driven error correction for video transmission**

(57)    The invention presents a method of applying forward error correction selectively to an encoded video sequence before it is transmitted. Forward error correction is targeted at portions of the video that will be most noticeably affected by any potential packet loss during transmission. The targeting is done using a perceptual error sensitivity model, which effectively maps an error visibility rating onto content-dependent and content-independent properties associated with a given portion video. The encoder and decoder settings will be used for the actual video sequence where forward error correction is to be applied are used in the training of the model, as they have a significant effect on the perception of any errors. Then, to adaptively apply forward error correction, a selected video sequence is encoded, and the encoded bitstream is analysed to determine content-independent properties. A decoded version of the video sequence is also analysed to determine content-dependent properties being determined. The content-independent and content-dependent properties are used in conjunction with the perceptual error sensitivity model to predict which slices of the video sequence will be most significantly affected perceptually by packet loss, and thus target FEC to those areas accordingly.

200 — Generate PES model

202 — Select video sequence to encode

204 — Encode video sequence

206 — Analyse encoded video sequence to determine content-independent, slice properties

208 — Analyse source video sequence to determine content dependent, picture properties

210 — Apply determined properties to PES model to predict MVR for each transmission unit

212 — Apply FEC to each transmission unit in dependence on predicted MVR of the unit

**Figure 2**

EP 2 713 616 A1

**Description**

**Field of the Invention**

This invention relates to error correction for a video sequence, in particular to an adapted forward error correction method where error correction is targeted on areas that are perceptually more sensitive to errors.

**Background to the Invention**

The increasing importance of live video services transmitted over the internet has highlighted the need for methods that can mitigate the effects of network impairments. For services unable to utilise retransmission to mitigate the effects of network losses, packet loss impairment (PLI) can have a major impact on the perceived video quality experienced by the end-user. Video sequences are usually compressed prior to transmission by encoding using a suitable video compression codec such as MPEG-2 or H264. Each frame of the encoded video sequence is made up of a number of macroblocks. Packet loss can occur to a given macroblock when the associated network packet that carries the macroblock is lost in the network during transmission.

An example of a service that can be affected by PLI is a low latency IP based broadcast video system, where video can only be sent once, and any packets lost during transmission have to be dealt with without the benefit of retransmission. For this and other services affected by PLI, forward error correction (FEC) is often employed to reduce the effects of the network losses.

FEC involves adding redundancy to the transmitted data to allow the receiver to recover from losses without further intervention from the transmitter. Reed-Solomon (RS) codes are error correcting codes that are often used for FEC. Pro-MPEG Forum's Code of Practice #3 (COP#3) is an FEC standard developed for video transmission over IP networks. Both methods transmit additional data that can be used by the receiver to recover packets lost during transmission.

Techniques also exist that try and optimise the use of FEC for specific applications and channel loss characteristics.

One method of FEC optimisation is to use unequal error correction (UEC) of encoded video data to increase the performance of FEC for transmission of video over lossy networks. UEC utilises the non-uniform level of importance of different frames, slices or macroblocks of data within an encoded video stream. Applying error correction adaptively to the more "sensitive" parts of a video stream is proposed in a number of schemes where adaptation is based on properties such as motion, error duration and frame-type, which can be applied at frame, slice or macroblock level.

Existing UEC methods are based around assumptions about the relative impact that errors on different portions of encoded video data will have on the reconstructed image quality. Prediction of the impact of data loss can be based on simple mappings of parameters such as motion in the source video or error propagation extent from analysis of encoded/packetized data properties.

"An Adaptive Motion-Based Unequal Error Protection Approach for Real-Time Video Transport Over Wireless IP Networks" by Qi Qu et al., IEEE Transactions on Multimedia, Vol 8, Issue 5, October 2006, pages 1033-1044, proposes a low-complexity adaptive motion-based unequal error protection video coding and transmission. It uses estimated motion levels, knowledge of the bitrate of the encoder, and feedback of network conditions, to adaptively adjust operating parameters of both the video source encoder and also the FEC channel encoder to maximise the delivered video quality.

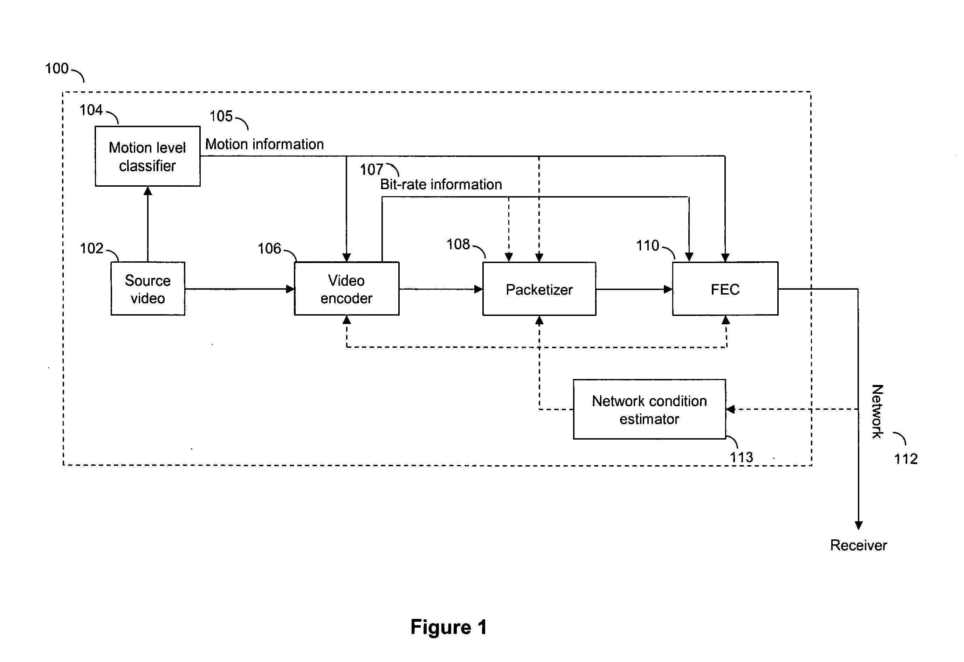

Figure 1 illustrates the system described in Qu et al. Fig 1 shows a video source 102 providing a video frames to an encoder 106, which in turn feeds a packetizer 108, and then a FEC encoder 110. The source video also feeds a motion level classifier 104, which determines motion information 105 from the video frames, and passes this information onto the FEC encoder 110. Bit-rate information 107 is also obtained from the video encoder and passed onto the FEC encoder 110. The FEC encoder uses both the motion level information as well as the bit-rate of the encoding to apply FEC encoding adaptively to each frame. A consideration is also made by the network channel estimator 113 of the channel conditions, which is passed onto the FEC encoder 110, and taken into consideration for FEC encoding.

"AMISP: A Complete Content-Based MPEG-2 Error-Resilient Scheme" by Pascal Frossard et al., IEEE Transactions on Circuits and Systems for Video Technology, Vol. 11, No. 9, September 2001, describes an adaptive MPEG-2 information structuring (AMIS) mechanism that modulates the number of resynchronisation points to maximise perceived video quality. The end-to-end quality depends on both the encoding quality and the degradation due to data loss. AMIS constantly determines the best compromise between the rate allocated to encode the pure video information and the rate aiming at reducing the sensitivity to packet loss. A packet is marked to be protected whenever its hypothetical loss would introduce an unacceptable degradation. Comparison is performed in terms of PSNR and perceptual modelling, but relies on computationally expensive local decoding and error propagation modelling.

## Summary of the Invention

It is the aim of embodiments of the present invention to provide an improved method of forward error correction.

According to one aspect of the present invention, there is provided a method of applying forward error correction to a video sequence, said method comprising the steps of:

i) selecting an encoded video sequence, said encoded video sequence encoded at target encoder settings, and said encoded video sequence comprising a plurality of transmission units;

ii) selecting a perceptual error sensitivity model generated using the target encoder settings and target decoder settings, wherein the selected perceptual error sensitivity model maps an error visibility rating onto each of a plurality of sets of values of measured video properties associated with a transmission unit;

iii) analysing the encoded video sequence and an uncompressed video sequence corresponding to the encoded video sequence to determine a plurality of video properties associated with each transmission unit of said encoded sequence; and

iv) for each transmission unit, determine an associated error visibility rating using the determined video properties and the selected perceptual error sensitivity model;

v) applying forward error correction to each transmission unit in dependence on the associated error visibility rating.

The perceptual error sensitivity model may be trained using test video sequences subjected to errors, and where the visibility of those errors are measured subjectively.

The transmission units of the selected video sequence can be ranked according to the determined error visibility rating, and forward error correction is applied selectively to a proportion of the highest ranked transmission units. The proportion may be defined by a threshold.

The forward error correction can be applied over a window of transmission units.

The invention takes into account encoder and decoder settings when training the perceptual error sensitivity model, which is important as the settings will affect error visibility. In particular, the decoder settings are likely to provide some error concealment as a result of error recovery techniques used.

The modelling is performed only the once, but can be applied repeatedly to multiple live video sequences. Thus, the need for error simulation on the live video sequence and associated local decoding to measure resulting error visibility is avoided. This would otherwise be required in order to simulate error recovery mechanisms such as motion compensated error correction (MCEC). This is as a result of training the perceptual error sensitivity model to decoder settings and any recovery mechanisms. The invention is thus far less computationally intensive that alternative arrangements.

## Brief Description of the Drawings

For a better understanding of the present invention reference will now be made by way of example only to the accompanying drawings, in which:

Figure 1 shows a block diagram of a prior art system for adaptive forward error correction of video sequences;
Figure 2 is a flow chart summarising the main steps of an example of the present invention;
Figure 3 is a block diagram of the modules for training a perceptual error sensitivity model in an example of the present invention;
Figure 4 is a flow chart detailing the steps of the method for training the perceptual error sensitivity model;
Figure 5 is a block diagram shower a server used for operating an example of the present invention;
Figure 6 is a table showing error events and their corresponding measured content dependent and content independent video properties, as well as the mean visibility rate of each error in an example of the present invention;
Figure 7 is a decision tree classifier in an example of the present invention;
Figure 8 is a table showing the predicted visibility rate classifier decision boundaries and output class in an example of the present invention;
Figure 9 is a block diagram of a forward error correction system driven by the perceptual error sensitivity model in an example of the present invention;
Figure 10 is a flow chart detailing the steps of the method used by the forward error correction system driven by the perceptual error sensitivity model in an example of the present invention;
Figure 11 is a table showing measured video properties from an operational video sequence with associated measured video properties and PVR values;
Figure 12 is a diagram showing a frame superimposed with PVR ranking values;
Figure 13 is a diagram showing an FEC method.

**Description of Preferred Embodiments**

The present invention is described herein with reference to particular examples. The invention is not, however, limited to such examples.

The invention presents a method of applying forward error correction selectively to an encoded video sequence before it is transmitted. Forward error correction is targeted at portions of the video (preferably at the slice level) that will be most noticeably affected by any potential packet loss during transmission. The targeting is done using a perceptual error sensitivity model, which effectively maps an error visibility rating (from subjective tests) onto various properties associated with a given portion video. The properties may be content dependent from the picture domain, such as spatial and temporal differences of the pixels, or may be content-independent properties from the encoded bitstream, such as spatial extent and temporal extent of the slice. The temporal extent results from some slices being used as a reference for other slices in other frames. The model is trained using test video sequences that are subjected to errors, and the visibility of those errors measured subjectively. The encoder and decoder profiles that will be used for the actual video sequence where forward error correction is to be applied are used in the training of the model, as are the specific encoder and decoder settings, to ensure that the model correctly reflects the live system. This is important as the encoder and decoder settings have a significant effect on the perception of any errors. For example, the decoder settings are likely to provide a degree of error masking if the settings specify use of surrounding motion vectors/blocks when data is lost.

Then, to adaptively apply forward error correction to a selected video sequence, the selected video sequence is encoded, and the encoded bitstream is analysed to determine content-independent properties. A decoded version of the video sequence is also analysed, where the decoded version may be the original source video that is used by the video encoder, or may a locally decoded version of the encoded video sequence. The analysis of the decoded version results in content-dependent properties being determined. The content-independent and content-dependent properties are used in conjunction with the perceptual error sensitivity model to predict which slices of the video sequence will be most significantly affected perceptually by packet loss, and thus target FEC to those areas accordingly.

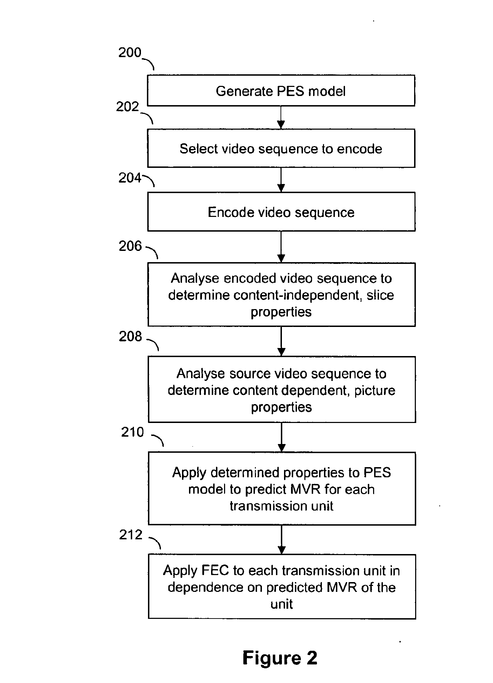

Figure 2 is a flow chart summarising the overall steps of the method in an example of the present invention. The overall method starts with the generation of a perceptual error sensitivity (PES) model shown in in step 200. One preferred approach taken in generating the PES model will be described later, but involves training a model using test video sequences subjected to errors and subjective testing. In step 202, a video sequence is selected, and encoded in step 204. The encoding is done according to an encoding standard such as H264 or MPEG-2.

In step 206, the encoded video sequence is analysed to determine content-independent, slice properties. Examples of slice properties include the spatial position of the slice within the associated frame, and the temporal extent of the effect of losing the slice relative to the surrounding group of picture (GOP) structure.

In step 208, the source video sequence is analysed to determine content dependent, picture properties. The source video sequence can be the original video sequence used to generate the encoded sequence, or may be a locally decoded version of the encoded sequence from step 204. Examples of picture properties include spatial difference measure, which is a pixel difference measure between the slice and the surrounding picture.

In step 210, the slice and picture properties determined from steps 206 and 208 are applied to the PES model to determine a predicted visibility rate (PVR) for each transmission unit. The transmission unit could be a slice, but may be a number of slices grouped together into a single packet upon which FEC will be applied. Thus, in step 212, FEC is applied to each transmission unit in dependence on the predicted PVR.

The techniques in the invention are applied to encoded video compressed in accordance with a video coding standard such as H264. Thus, a summary of the relevant features of video coding will first be described.

The H264 video coding standard, and indeed most modern video compression techniques, is based around motion compensated transform coding. The basic idea is to encode one picture, and use this encoded picture as a reference from which to predict the other pictures where possible, thus removing temporal redundancy, and encode the prediction residual with a block based transform coding technique. Each subsequent picture can thus be predicted from the previously encoded picture(s).

A source video sequence is made up of a number of sequential pictures or frames. The terms picture and frame are used interchangeably in the context of video coding. Each picture is usually divided into 16x16 pixel regions called macroblocks. The video encoder searches one or more previously encoded and stored (reference) pictures for a good match or prediction for the current macroblock. The displacement between the selected macroblock in the reference picture and the current macroblock being predicted is known as a motion vector.

The macroblocks themselves are grouped into slices, where a slice is typically made up of one or more contiguous macroblocks. Slices are important for handling errors, as if a bitstream contains an error, the decoder can at the most basic level simply skip the slice containing the error and move to the next slice.

Using prediction from a previous picture is generally known as inter-frame coding. However, in many situations it is desirable to encode a macroblock without reference to a previously encoded picture. This is called intra-frame coding. Whilst no reference is made to other pictures, reference can be made, within an intra coded picture, to other encoded macroblocks within the same frame. For example, various forms of spatial prediction, using already coded pixels of the current picture, can be used to remove redundancy from the source macroblock before the transform and quantisation processes.

The difference between the source picture and the prediction, known as the prediction error, or prediction residual, is usually transformed to the frequency domain using a block based transform, and is then quantised with a scalar quantiser, and the resulting quantised coefficients are entropy coded.

The pictures are categorized into different types: intra frames (I-Frames), predicted frames (P-frames), and bi-directionally predicted frames (B-frames). I-frames are intra coded, P-frames are inter coded and based an earlier reference frame, and B-frames are inter coded and based on an earlier and a later reference frame.

Slices can also be identified by a prediction type (I, P, or B) as for pictures. A picture header code specifies a primary picture type, where I means all slices within the frame will be I, I/P will be I or P, and I/P/B will be I, P or B. Similarly, a slice header code, while obeying primary picture type, specifies slice prediction type, where I means all macroblocks in slice are I, P means all are P or I, and B means all are B or I. Each macroblock has a type code to specify its type, obeying the corresponding slice prediction type.

All encoded video data is further organised under top-level Network Abstraction Layer (NAL) units, which have a header, including a unique start-code for synchronisation, followed by the payload data. A NAL unit's header offers recovery points in errored conditions. Each NAL can contain one or more slices, and where each NAL unit can be considered as a transmission unit.

A group of pictures (GOP) is a collection of successive pictures within an encoded video sequence. A GOP structure specifies the order in which the different picture types are arranged. For example, a GOP might contain 12 pictures, and have GOP structure of IBBPBBPBBPBB.

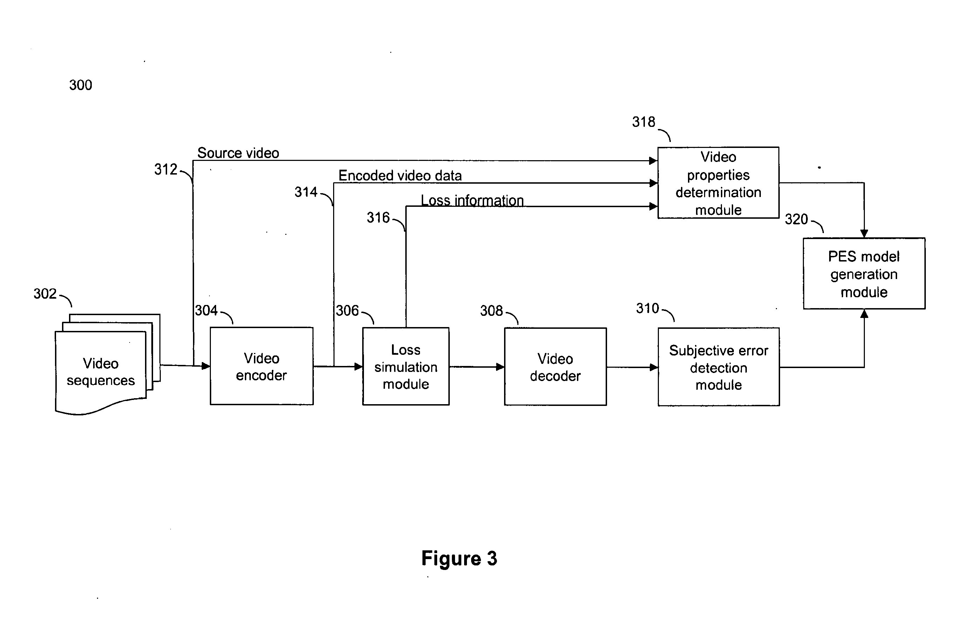

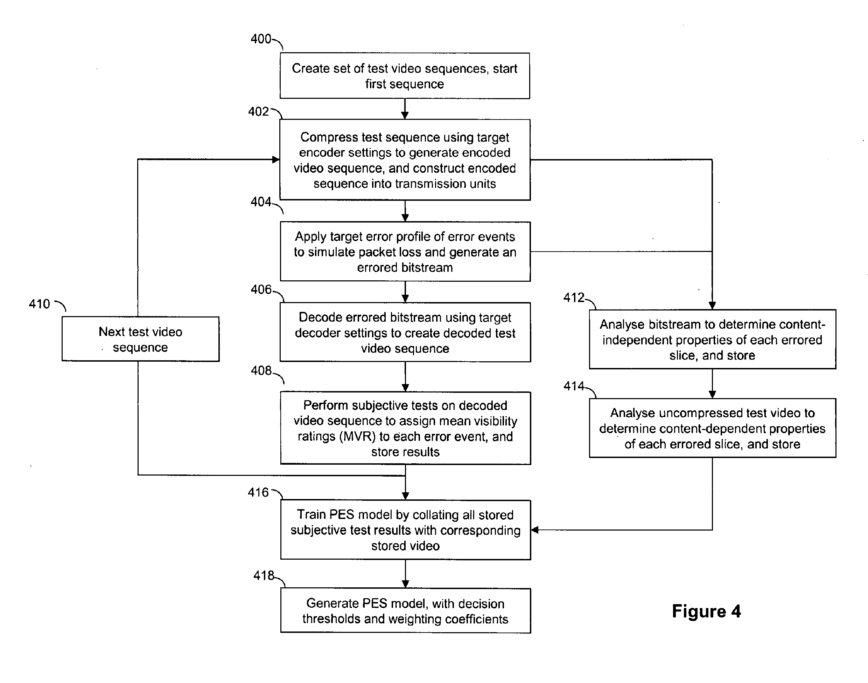

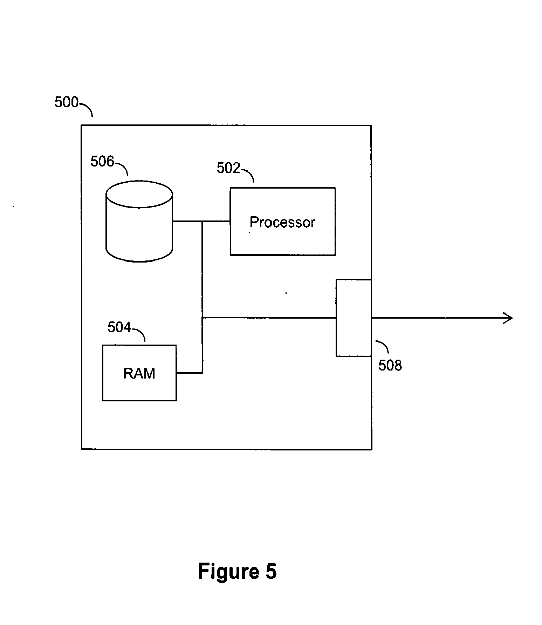

Turning back to the specific invention. Figure 3 shows a block diagram of the modules used for training a perceptual error sensitivity PES model. Each module shown may be implemented as a software module that can be executed by a processor on a suitable computer or server as shown in Figure 5. Figure 5 shows a server 500 comprising a processor 502, memory 504, storage 506, and video interface 508. The processor 502 operates under the control of the software modules stored in the storage 506, and also has access to memory 504. The software modules include a general purpose operating system as well as specific software modules relating to the present invention. Video signals can be received and sent from the server via the video interface 508. Whilst the software modules are described as being stored in the storage 506, the modules may alternatively be implemented in hardware. The operation of each module will be described with reference to the flow chart of Figure 4.

The PES model, using test video sequences, maps the measured video properties onto an error visibility rating via subjective testing. The result is a model that can then be used to determine a predicted error visibility rating PVR (in effect an error sensitivity rating) for areas of an encoded video sequence using the video properties from that area. FEC can then be applied to areas in the video sequence in dependence on the predicted visibility rating.

So, starting at step 400, a series of test video sequences 302 are created for use in training the PES model. The sequences may be stored in the storage 506. The sequences may be of any length, but in this example, they are 15 minutes long to ensure that the sequences are short enough to maintain subject concentration during the training. The test video sequences 302 are created to cover a range of genres so that various video properties are covered, such as different types of motion, pans, contrast. The first of the test video sequences is then selected.

In step 402, the test video sequence is compressed by the video encoder 304. The compression may be done using any suitable encoding standard, which in this example is H.264, and encoder settings are selected that match the settings of the encoder used to encode the operational video sequences. The encoder settings, which include the encoder profile, define encoder features and parameters such as GOP length, GOP structure, resolution, frame-rate, slice size, bit-rate and a target network abstraction layer NAL unit size. The PES model generated is specific to a given combination of target encoder settings as well as specific target decoder settings. However, separate PES models may be trained for different encoder/decoder setting combinations. As will be discussed later, the decoder settings used for decoding the encoded video are very important and will provide masking effects for some errors, so it is important that the PES model generation is also matched to decoder settings and any other specific implementation variations at the decoder.

The encoded test video sequence is then divided into transmission units). In this example, a single slice is used per NAL unit with a target size of 1300 bytes, so each slice can be considered as the transmission units (with recovery points) for the purposes of the invention.

There are other NAL unit types that contain non-slice data. These use only a small fraction of the total transmitted bits, but can be very important. However, for the purposes of this invention, they are considered as being transmitted reliably due to their relatively small proportion.

Processing then continues in two streams, one relating to the generation of an errored bitstream before subjective testing, and the other to the analysis of the test video and encoded bitstream to determine various properties of the video sequence. The generation of the errored bitstream will be described first, though a person skilled in the art will appreciate that both streams can operate in any order or indeed concurrently.

Turning first to the generation of the errored bitstream, in step 404, packet loss is simulated by the loss simulation module 306 in accordance with a target error profile, which sets out how and when the errors are applied to the transmission units. The error events themselves take the form of dropping one or more consecutive slices. In practice, entire NAL units are dropped, each of which contain a slice in this example. The target error profile is created to mirror errors that are likely to be encountered under operational conditions. In this example, the error profile allows for one error event (a dropped slice or a number of consecutive dropped slices) per 10 second sequence of video, with a 3 second minimum separation between error events, which allows subjects to assess and respond to the error events in isolation. The separation between error events also allows the errors to be reliably associated with the measured content dependent and content independent properties of the video sequence. The length of the error event (length of each group of dropped slices) is also chosen to reflect operational conditions. Different slice types (I, P, and B) are also targeted to give enough subjective data for each slice type.

The result of applying the target error profile is an errored bitstream made up of the encoded video sequence missing a number of transmission units as a result of dropped slices.

In step 406, the errored bitstream is decoded by the video decoder 308. The decoding is performed according to a target decoder settings. The target decoder settings are chosen to mirror the decoder settings used for decoding the operational video sequence later, and also includes any error recovery technique matching that is to be used on the operational video sequence.

In step 408, subjective tests are performed, where the decoded errored bitstream is played back to a user and the user indicates when they are able to observe an error. The playback of the video, recording and synchronisation of errors as indicated by a user, are all handled by the subjective error detection module 310. Thus, each error event will either have been classified as being "visible" by the user with a visibility rating of "1 ", or will not have been noticed, in which case the error is classified as being "invisible" with a visibility rating of "0". The subjective testing is preferably repeated a number of times, each time with a different user. The individual visibility ratings for each error is averaged over all the users, resulting in a mean visibility rating (MVR) for each error, ranging from 0 to 1.

The results of the subjective testing are stored in the store 506 in the server 500 for use later.

Once analysis of the test video sequence is complete, processing turns to the next test video sequence.

In step 410, the next test video sequence is selected, and processing returns to step 402, and steps 402 to 408 are repeated for each test video sequence, until all the test video sequences are processed.

As stated earlier, analysis of the properties of the test video sequence is also performed for each of the test video sequences. This processing is shown in steps 412 and 414. In steps 412 and 414, both the encoded and source video sequences are analysed by the video properties determination module 318. The video properties determination module 318 takes as inputs the unencoded source video sequence 312, the encoded video sequence 314, as well as information 316 from the loss simulation module 306 identifying which slices from the video sequence have been dropped to simulate errors.

Specifically, in step 412, the encoded test video sequence is analysed by video properties determination module 318 to determine content-independent properties associated with each errored slice in the sequence. Much of this information is obtained from the video encoder 304, as the properties result from the encoding process once the encoded bitstream is generated. The content-independent properties that are determined are a slice spatial extent (SSE), a slice temporal extent (STE), and a slice spatial position (SSP).

Viewing tests have shown that spatial extent has particular importance from the fact that the larger the area of the slice, then the more chance that a strong moving edge or evolving image will be caught and poorly recovered. Many errored slices are predominantly well recovered, but show visible artefacts at such poorly recovered regions. Slice spatial extent (SSE) is a figure that represents the percentage of the total picture area in terms of macroblocks. For example, if the current slice contains A macroblocks and the frame that the slice resides in contains B macroblocks, then the SSE for that slice is given by 100 x A/B.

Short duration artefact errors are expected to exhibit lower visibility rates. This property may be represented as slice temporal extent (STE), measured inframes, and determined from the prediction type of the slice and the surrounding GOP structure. A maximum duration calculation can be used, where visible error propagation is assumed to reach the limits imposed by the GOP structure and the prediction type of the errored slice. No consideration is given to the increased accuracy that might be offered by analysis of motion vectors or intra-updates within the propagation window. For example, a typical GOP size, GOP structure, and resulting STE of each slice type is shown in Table 1 below.

Table 1

| GOP size (frames) | 27 |
| --- | --- |
| GOP structure | IBBPBBP ....PBBI |
| STE-I | 29 |

(continued)

| STE-P | 5..26 |
|-------|-------|
| STE-B | 1 |

Spatial position is also an important consideration for error masking and recovery. Errors away from the visual attention region of a picture are less likely to be detected by users. A user's visual attention region tends to be near the centre of the picture and, therefore, a measure of slice offset from the centre is considered. The slice spatial position (SSP) measure is calculated as the minimum vertical offset of the slice from the centre of the picture as proportion of the picture size. No horizontal offset is considered due to the horizontal scanning nature of the slices used, which often take up an entire horizontal row of macroblocks.

Thus, following analysis of the encoded bitstream in step 412, the content-independent video properties of SSE, STE and SSP for each errored slice are determined and stored.

In step 414, a similar analysis is performed, but this time on the uncompressed test video sequence by the video properties determination module 318 to determine content-independent properties associated with each errored slice in the video sequence. The content-dependent properties that are generated are a video spatial difference (VSD), and a video temporal difference (VTD).

The properties of the video at and around the spatio-temporal region of an error have two important effects. The first is masking, where errors may be made less visible by texture, luminance and motion around the loss area. Conversely, errors may be made more visible by the presence of strong edges on a plain background running through the loss area. The second is accuracy of recovery. The video spatial difference (VSD) property is a pixel difference measure between the selected errored slice and the surrounding frame. Video temporal difference (VTD) property is a pixel difference measure between the selected errored slice and the corresponding slice region in previous frames. The properties are then stored.

Now, describing the content-dependent properties in a little more detail, a video temporal difference (VTD) may be calculated using a macroblock difference function, averaging intensity differences between successive macroblocks for a slice and implemented over an area of expected temporal propagation. Similarly, a video spatial difference (VSD) function may be calculated using intensity differences between spatially neighbouring macroblocks for a slice within a frame, again implemented over an area of expected temporal propagation.

A macroblock intensity measure suitable for use in calculating both VSD and VTD is given by equation (1) below.

$$L(n,m) = \frac{1}{Jtot(J(n,m))} \sum_{j \in J(n,m)} lum(j) \qquad m \in M(n) \qquad n \in N \qquad (1)$$

where,

$L(n,m)$ is the average intensity of macroblock m from frame n.

$N$ defines the set of frames in a video sequence.

$M(n)$ defines the set of macroblocks within frame $n$.

$J(n,m)$ represents the set of pixels within macroblock m of frame $n$.

$lum(j)$ represents the luminance value of pixel $j$ from set $J(n,m)$.

$Jtot(J(n,m))$ equals the number of pixels within analysis block $m$ of frame $n$.

For the calculation of VSD, first a macroblock spatial difference measure $msd(n,m)$ for macroblock $m$ of frame $n$ may be calculated according to equation (2).

$$msd(n,m,i) = abs(L(n,m) - L(n,i)) \qquad m \in M(n) \qquad n \in N \qquad (2)$$

In equation (2), variable $i$ identifies a macroblock within frame $n$ belonging to the same spatial analysis region as $m$. Typically, this would be a neighbouring macroblock. This macroblock spatial difference measure may then be used as the basis for the calculation of an average slice spatial analysis measure $SD$, according to equation (3).

$$SD(n,s) = \frac{1}{MStot(n,s)} \sum_{m \in MS(n,s)} \left( \frac{1}{Itot(m)} \sum_{i \in I(m)} msd(n,m,i) \right) \qquad s \in S(n) \qquad n \in N$$

(3)

where,

$I(m)$ defines the set of neighbouring macroblocks to macroblock $m$.

Itot(m) defines the total number of macroblocks in set I(m).

$MS(n,s)$ defines the set of macroblocks within a slice s of frame $n$.

MStot(n,s) defines the total number of macroblocks within set MS(n,s).

S(n) defines the set of slices within frame n.

A time-averaged slice spatial difference measure *VSD* may then be calculated according to equation (4), where averaging is performed over the expected area of propagation for an error in (n1 ,s1).

$$VSD(n1,s1) = \frac{1}{NEtot(n1,s1)} \sum_{(n,s) \in NE(n1,s1)} SD(n,s) \qquad (4)$$

where,

$(n1,s1)$ identifies a specific set of macroblocks $s1$ within frame $n1$.

NE(n1,s1) gives the set of macroblocks $(n,s)$ in each frame over which the spatial difference measure will be calculated. Thus, an error propagating from frame n1 over the following 2 frames would result in NE(n1,s1)={(n1,s1),(n1+1,s1), (n1+2,s1)}, where s1 references a set of co-located macroblocks within successive frames.

NEtot(n1,s1) gives the number of $(n,s)$ entries (frames of propagation) for an error in slice $(n1,s1)$.

For the calculation of VTD, first a temporal difference measure mtd$(n,m)$ for macroblock m of frame n may be calculated according to equation (5).

$$mtd(n,m) = abs(L(n,m) - L(n-1,m)) \qquad m \in M(n) \qquad n \in N \qquad (5)$$

This macroblock temporal difference measure may then be used as the basis of slice temporal analysis TD, according to equation (6).

$$TD(n,s) = \sum_{m \in MS(n,s)} mtd(n,m) \qquad s \in S(n) \qquad n \in N \qquad (6)$$

where,

$MS(n,s)$ defines the set of macroblocks within slice s of frame $n$.

Finally, a time-averaged slice temporal difference measure *VTD* may then be calculated according to equation (7) below.

$$VTD(n1,s1) = \frac{1}{NEtot(n1,s1)} \sum_{(n,s) \in NE(n1,s1)} TD(n,s) \qquad (7)$$

The perception of an error artefact in the recovered region greatly depends on the operation of the recovery technique used by the video decoder, and defined by the decoder implementation and settings. Motion compensated error concealment (MCEC) can work extremely well for some types of sequences, but do not perform as well with evolving or revealing objects. Thus, whilst consideration of the various content-dependent and content-independent video properties is important, encoder and decoder settings and any error concealment technique used by the decoder in step 406 is also important.

Other properties could be used as well as, or instead of those identified above, but it has been found that the above properties provide a good correlation with subjective test results. Alternatively, a subset of the properties above could be used, but again, the combination of the above five properties appears to give the best results.

The analysis in steps 412 and 414 is repeated for each test video sequence as each new sequence is selected following step 410.

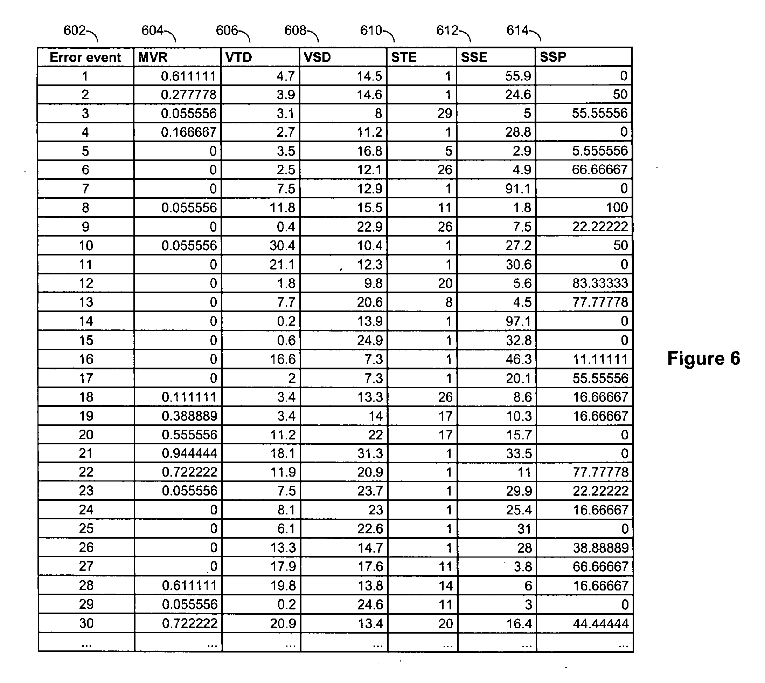

The results from the subjective testing in step 408 and the video properties analysis in steps 412 and 414 are collated in step 416. Figure 6 shows a table identifying a number of error events, and the associated MVRs determined through subjective testing in step 408, as well as the video properties determined in steps 412 and 414. The first column 602 lists the error event identifier, the second column 604 lists the MVR, the third column 606 lists the VTD property, the fourth column 608 lists the VSD property, the fifth column 610 lists the STE property, the sixth column 612 lists the SSE property, and the seventh 614 lists the SSP property.

For example, error event 4 resulted in an MVR of 0.1666667, which suggests that 1 in 6 users found the error visible during subjective testing. Error event 4 is also associated with a VTD of 2.7, a VSD of 11.2, an STE of 1, an SSE of 28.8, and an SSP of 0.

Then, in step 418, the results of the testing and analysis, resulting in the data shown in the table of Figure 6, is processed to generate the PES model. The PES model is a statistical model that aims to predict the mean visibility rating associated with a set of video measured video properties. Thus, a model is generated where weightings are applied to each of the measured properties in a manner that best fits the training data as shown in Figure 6. As there are multiple input or predictor variables (the video properties), upon which there is a single dependent variable (MVR), and because the relationship is not a straightforward linear relationship, the preferred method of modelling is to use partition analysis (also referred to as recursive partitioning). A person skilled will appreciate that other predictive modelling technique could be used, as long as the technique results in a model that can predict the MVR based on the measured video properties.

With partition analysis, the PES model can be visualised as a partition or decision tree where the data gathered is recursively partitioned according to optimal splitting relationships created between the input variables and the dependent variable, and is done to best fit all the data gathered. The result is a tree-based rule for predicting the MVR based on the measured video properties. The generating of the PES model is performed in step 418.

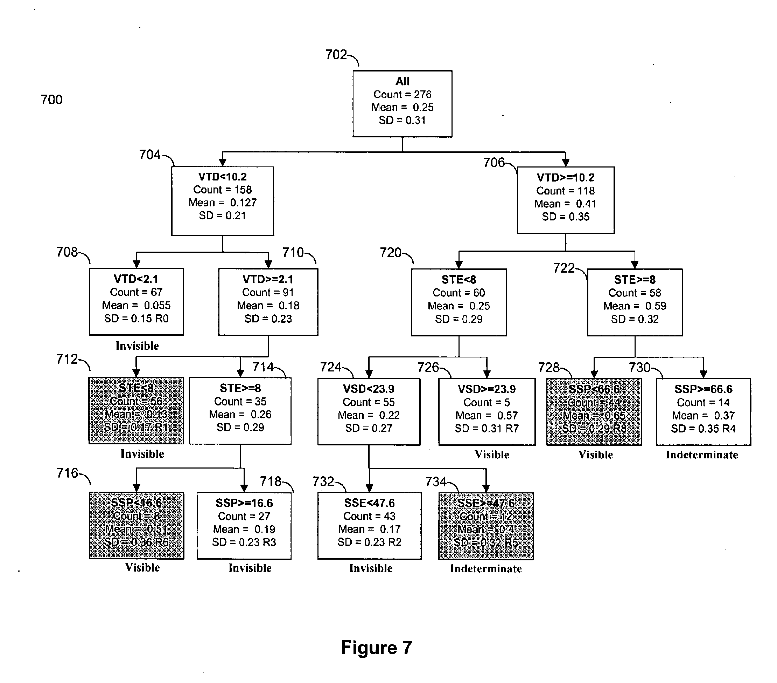

Figure 7 shows the resulting PES model as a decision tree classifier 700 comprising a number of nodes from 702 to 734. The path at each node depends on a binary decision using one of the factors from the set of video properties. The set of MVR values from the subjective tests enter the top of the classifier 700 at node 702, and are split into subsets at each layer of the classifier, by applying decision threshold tests to the associated video properties. Terminal nodes 708, 712, 716, 718, 726, 728, 730, 732 and 734 are shown in grey, and represent final visibility results.

Each node shows the condition that must be satisfied by the video properties to enter the node, the count of errors that have passed through in the training process, the mean MVR of each error that has passed through (which we refer to as the predicted visibility rate PVR), the standard deviation SD of the MVR values, and the rank number. Alternatively, the PVR can be calculated using some other function of the cluster properties such as MVR. Thus, each node represents a cluster of events that satisfy certain conditions, and each has an associated PVR. The standard deviation SD is provides an indication of the quality of the cluster.

So, all the measured error events processed in steps 402 to 408, 412 and 414, are used to build the decision tree classifier of the type shown in Figure 7. The use of this decision tree in relation to application of adaptive FEC will be described shortly.

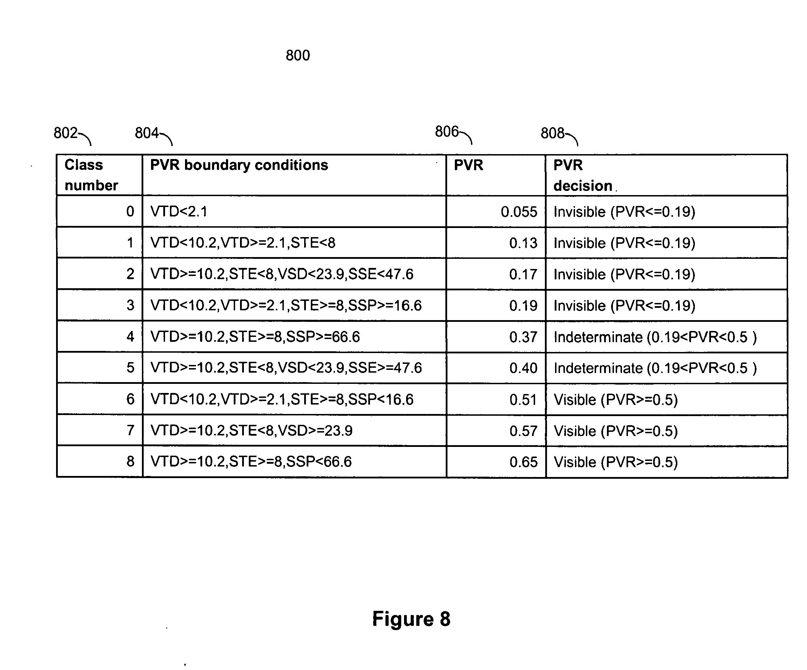

Figure 8 shows the decision tree of Figure 7 is a tabular form. Figure 8 shows a table 800 with columns for each of: class number 802, PVR boundary conditions 804, PVR output 806 and PVR class 808. The class number 802 is identifier for each of the terminal node clusters. The PVR boundary conditions relate to the conditions that are satisfied by the relevant video properties. The PVR output is the average of all the MVR values of the cluster of errors that fall into a given class (and satisfy the given boundary conditions). The PVR class describes the PVR class, where PVR <= 0.19 is described as "invisible", 0.9<PVR<0.5 is "indeterminate", and PVR>=0.5 is "visible".

For example, class number 5 relates to errors having VTD>=10.2, STE<8, VSD<23.9, and SSE>=47.6, resulting in a PVR output of 0.40. It can be seen from these values, that class number 5 is equivalent to terminal node 734 of Figure 7.

The ranges for PVR class may vary, as they only provide a description of the PVR, and are not essential to the operation of the PES model described below.

The resulting PES model is stored in storage 506 for use for adaptive FEC as described below. It should be noted that different PES models can be generated for different encoder/decoder settings, so that likely combinations of operational encoder/decoder settings all have a PES model that reflect their operational conditions. This can be done by repeating steps 402 to 418 with different sets of encoder/decoder setting combinations.

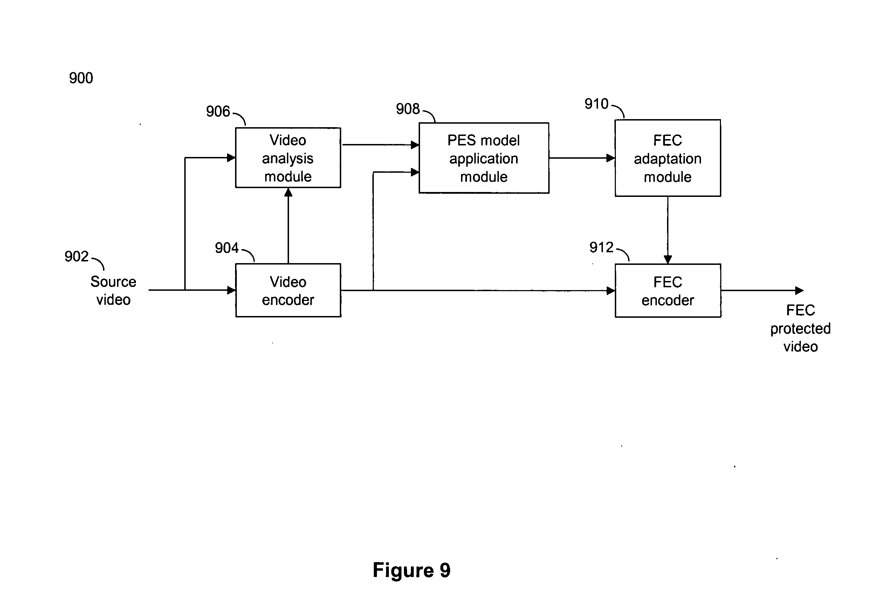

Figure 9 shows a block diagram 900 of the modules used for applying training a perceptual error sensitivity PES model. Each module shown may be implemented as a software module that can be executed by a processor on a suitable computer or server like that shown in Figure 5. The server used for applying the PES model for FEC can be the same server as the server used earlier for generating the PES model, although the two servers may be separate and operate independently of each other. In the latter case, the PES model may simply be passed from the PES model generating server to the FEC applying server used by Fig 9.

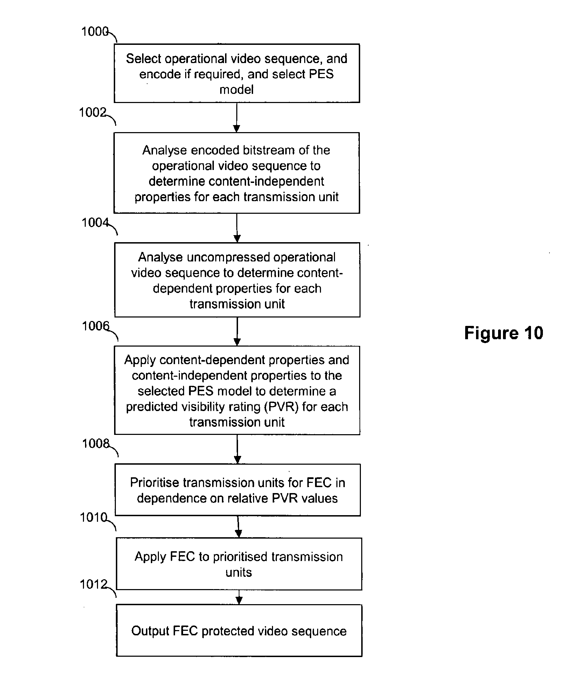

The operation of the modules of Figure 9 will now be described with reference to the flow diagram of Figure 10.

In step 1000, the operational video sequence 902 (the sequence for transmission and to which FEC is to be applied) is selected. The selected video sequence may be retrieved from a local store or may be received via a video interface from an external source. The selected video sequence is then encoded by the video encoder 904 to generate an encoded bitstream. In this example, the video encoder operates 904 according to the H264 standard, with encoder settings that match the PES model, or at least one of the PES models if several were generated, generated by the system of Figure 3. As described above, it is important that the encoder (and decoder) settings used for the operational video sequence matches that used to train the PES model that will in turn be used with the operational video sequence. Thus, a PES model is also selected that matches the encoder settings used here, and also with decoder settings that match the decoder settings that will be used to by the decoder to decode the FEC encoded sequence that is to be generated here,

In step 1002, the encoded bitstream is analysed by the video analysis module 906 to determine content-independent properties for each transmission unit of the encoded bitstream, where a transmission unit in this example comprises a slice. The content-independent properties are those of slice spatial extent (SSE), slice temporal extent (STE), and slice spatial position (SSP), as described above in relation to PES model generation. These values are stored with an associated transmission unit index for reference.

In step 1004, a similar analysis is performed on the uncompressed selected video sequence by the video analysis module 906. The uncompressed video can be the selected video sequence if that is uncompressed, otherwise if the selected video sequence is already encoded, then a locally decoded version of the compressed selected video is used. In both cases, the video analysis module 906 analyses the video sequence to determine content-dependent properties of video spatial difference (VSD), and a video temporal difference (VTD) for each transmission unit of the sequence. The results are stored with the content-independent properties, resulting in a set of video properties for each transmission unit of the operational video sequence.

In step 1006, the video properties determined in steps 1002 and 1004 are applied by the PES model application module 908. Each set of video properties is applied to the selected PES model to determine a predicted visibility rating (PVR) for that transmission unit. All the transmission units are processed in order to get PVRs for each unit.

In step 1008, the PVR values for each transmission unit are passed onto the FEC adaptation module 910, where FEC can be applied adaptively to each transmission unit in dependence on its PVR value relative to others. In an example of the invention, a windowed approach is used, where a windowed sequence of transmission units is analysed by the FEC adaptation module, where a predefined proportion of transmission units having the highest PVR values relative to the other transmission units are marked for FEC encoding. The aim is to prioritise FEC to those transmission units that are most likely to result in visible errors when lost in a given window. In this example, the window is a time window made up of a number of GOPs. A windowed approach allows us to manage and modulate transmit buffer fill levels better. For example, in constant bit-rate video, a transmit buffer of encoded units is held and buffer-fill is fed back into the video encoder with the aim to avoid underflow or overflow. Managing FEC over a window has a smoothing effect on the data overhead, and thus can help provide more consistent transmit buffer fill rates.

Use of FEC introduces an overhead in the data transmitted, and thus some consideration of how much FEC is needed must be balanced against constraints on the amount of additional data that can be managed. The level of overhead introduced by FEC will depend on a combination of target QoS (visible errors per hour), expected conditions and application sensitivity (profile, codec settings etc).

One approach is to rank all the transmission units according to their PVR values, apply FEC to the transmission units having the highest PVR value or ranking within the given window. A threshold can be set, for example 40%, which sets out what proportion of the transmission units FEC can be applied to within the window. The threshold can apply to either a count of the total transmission units in the window, or to a total bit budget/allocation for the window.

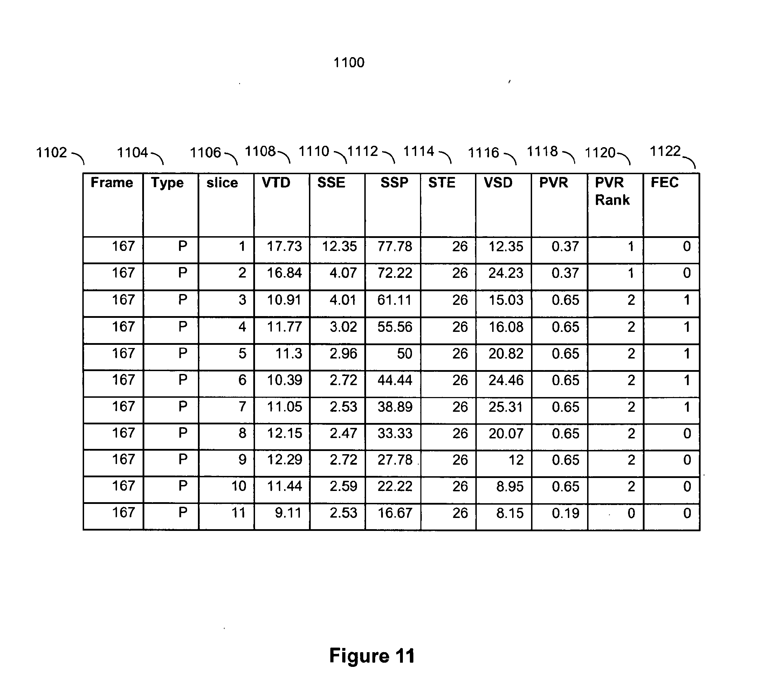

Figure 11 shows a table 1100 with an example of the data resulting from analysing a portion of an encoded bitstream. The table shows for each transmission unit, a frame number 1102, a frame type 1104, a slice number 1106, VTD 1108, SSE 1110, SSP 1112, STE 1114, and VSD 1116. Also shown is the resulting PVR values 1118 after application of the PES model, and also a PVR rank 1120, which provides a relative rank corresponding to the PVR values, with 2 being the highest ranked here, and 0 the lowest.

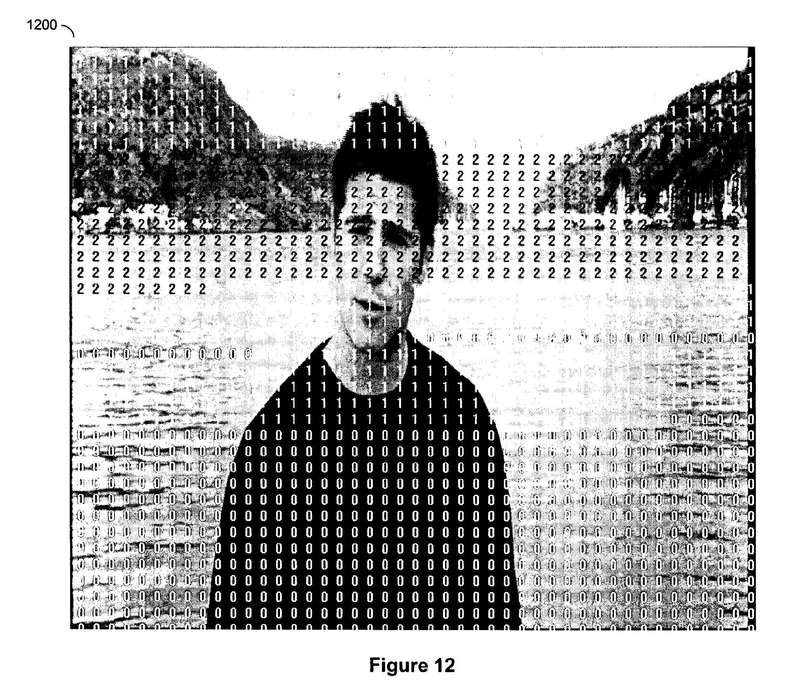

Figure 12 shows a frame 1200 from a video sequence where PVR rank values of 0, 1 and 2 have been superimposed onto each associated slice of the frame.

Thus, FEC can be prioritised according to either the PVR values 1118 themselves, or the PVR rank 1120. Using the data in Figure 11 as an example, if we set the threshold to 40% and the window over which FEC is to be applied is 11 slices long, then we need to find the 5 slices (rounded up here) with the highest PVR value or PVR rank. Here, the highest PVR rank is 2, but with 8 slices having this ranking. Thus, those 8 slices need to be further subdivided. In this example, the subdivision is based on SSP, with slices having the lowest SSP prioritised (lower values of SSP indicate closer to centre of the frame). The result is that slices 6, 7, 8 , 9 and 10 are identified for FEC. A further column in the table marked FEC 1122 identifies those slices with a 1 for FEC to be applied, and 0 for no FEC to be applied.

The slices thus identified can be passed onto the FEC encoder 912, where FEC is applied selectively to those identified transmission units in step 1010. Transmission units that are not marked for FEC, are passed through the FEC encoder without being subject to FEC.

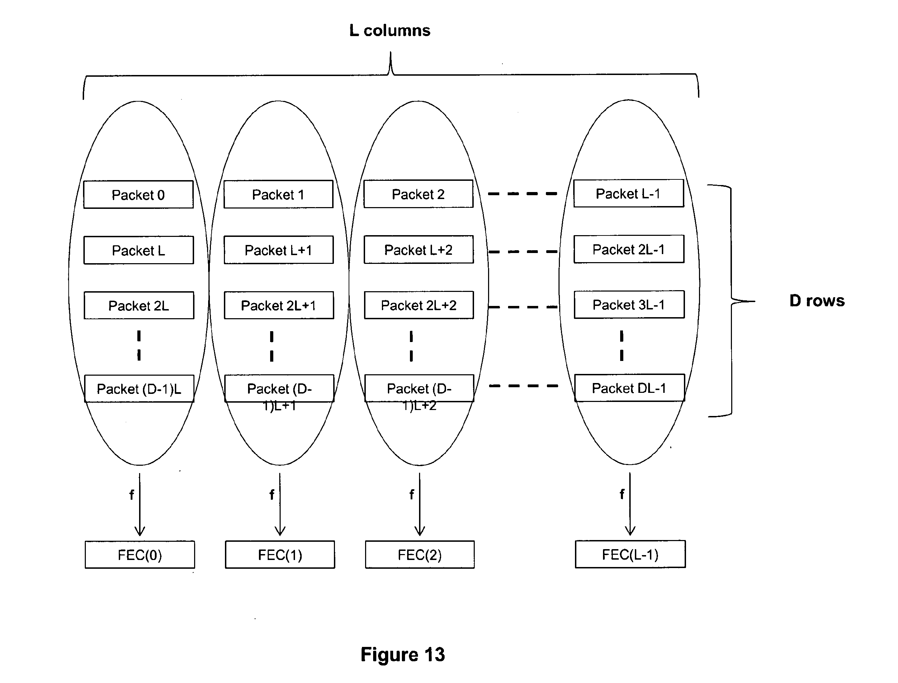

In step 1010, FEC is applied to the identified transmission units using Pro-MPEG Forum's Code of Practice #3 (COP #3) FEC standard developed. COP #3 addresses the issues of transporting video in packets over lossy networks, and particularly where burst packet losses are expected. COP #3 arranges packets in a matrix, where columns and rows of the matrix are used to generate FEC packets, such that a loss of one packet in a row or column may be corrected. The FEC packets are transmitted in addition to the video packets as a FEC overhead, such that a burst of lost packets, if not too long and affecting only one packet per column (or row), may be perfectly corrected. Figure 13 shows an example of COP #3 with column protected FEC.

Each of the packets shown in Figure 13 corresponds to a transmission unit in an example of the invention. However, it should be appreciated that the packets could be at the IP packet level above.

It should be noted that the generation of the PES model can be separated from the use of the model. Indeed, multiple PES models could be generated in advance using various likely combinations of encoder/decoder settings, and then those models provided to multiple service provider for use in applying FEC to their video transmissions. The service providers select the PES model that matches the decoder/encoder used from the PES models received, and apply it as described above to encoded video sequences for transmission. As such, the PES model generation is done only once, but can be used by more than one service provider, and with multiple video sequences.

Exemplary embodiments of the invention are realised, at least in part, by executable computer program code which may be embodied in application program data provided for by the program modules stored in storage 506 in the server 500. When such computer program code is loaded into the memory 504 of the server for execution by the processor 502, it provides a computer program code structure which is capable of performing at least part of the methods in accordance with the above described exemplary embodiments of the invention.

Furthermore, a person skilled in the art will appreciate that the computer program structure referred to can correspond to the process flow charts shown in the Figures, where each step of the flow charts can correspond to at least one line of computer program code and that such, in combination with the processor, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

**Claims**

1. A method of applying forward error correction to a video sequence, said method comprising the steps of:

   i) selecting an encoded video sequence, said encoded video sequence encoded at target encoder settings, and said encoded video sequence comprising a plurality of transmission units;
   ii) selecting a perceptual error sensitivity model generated using the target encoder settings and target decoder settings, wherein the selected perceptual error sensitivity model maps an error visibility rating onto each of a plurality of sets of values of measured video properties associated with a transmission unit;
   iii) analysing the encoded video sequence and an uncompressed video sequence corresponding to the encoded video sequence to determine a plurality of video properties associated with each transmission unit of said encoded sequence;
   iv) for each transmission unit, determining an associated error visibility rating using the determined video properties and the selected perceptual error sensitivity model;
   v) applying forward error correction to each transmission unit in dependence on the associated error visibility rating.

2. A method according to claim 1, wherein the perceptual error sensitivity model is trained using test video sequences subjected to errors, and where the visibility of those errors are measured subjectively.

3. A method according to claim 1 or 2, wherein the transmission units of the selected video sequence are ranked according to the determined error visibility rating, and forward error correction is applied selectively to a proportion of the highest ranked transmission units.

4. A method according to claim 3, wherein the proportion is defined by a threshold.

5. A method according to any preceding claim, wherein the forward error correction is applied over a window of transmission units.

**Figure 1**

200

```
┌─────────────────────────────────┐
│       Generate PES model        │
└─────────────────────────────────┘
```

202

```
┌─────────────────────────────────┐
│   Select video sequence to encode │
└─────────────────────────────────┘
```

204

```
┌─────────────────────────────────┐
│      Encode video sequence      │
└─────────────────────────────────┘
```

206

```
┌─────────────────────────────────┐
│  Analyse encoded video sequence to │
│ determine content-independent, slice │
│           properties            │
└─────────────────────────────────┘
```

208

```
┌─────────────────────────────────┐
│   Analyse source video sequence to │
│ determine content dependent, picture │
│           properties            │
└─────────────────────────────────┘
```

210

```
┌─────────────────────────────────┐
│  Apply determined properties to PES │
│     model to predict MVR for each │
│        transmission unit        │
└─────────────────────────────────┘
```

212

```
┌─────────────────────────────────┐
│ Apply FEC to each transmission unit in │
│ dependence on predicted MVR of the │
│             unit              │
└─────────────────────────────────┘
```

**Figure 2**

**Figure 3**

EP 2 713 616 A1

**400**
Create set of test video sequences, start first sequence

**402**
Compress test sequence using target encoder settings to generate encoded video sequence, and construct encoded sequence into transmission units

**404**
Apply target error profile of error events to simulate packet loss and generate an errored bitstream

**406**
Decode errored bitstream using target decoder settings to create decoded test video sequence

**408**
Perform subjective tests on decoded video sequence to assign mean visibility ratings (MVR) to each error event, and store results

**410**
Next test video sequence

**412**
Analyse bitstream to determine content-independent properties of each errored slice, and store

**414**
Analyse uncompressed test video to determine content-dependent properties of each errored slice, and store

**416**
Train PES model by collating all stored subjective test results with corresponding stored video

**418**
Generate PES model, with decision thresholds and weighting coefficients

**Figure 4**

Figure 5

| Error event | MVR | VTD | VSD | STE | SSE | SSP |
|---|---|---|---|---|---|---|
| 1 | 0.611111 | 4.7 | 14.5 | 1 | 55.9 | 0 |
| 2 | 0.277778 | 3.9 | 14.6 | 1 | 24.6 | 50 |
| 3 | 0.055556 | 3.1 | 8 | 29 | 5 | 55.55556 |
| 4 | 0.166667 | 2.7 | 11.2 | 1 | 28.8 | 0 |
| 5 | 0 | 3.5 | 16.8 | 5 | 2.9 | 5.555556 |
| 6 | 0 | 2.5 | 12.1 | 26 | 4.9 | 66.66667 |
| 7 | 0 | 7.5 | 12.9 | 1 | 91.1 | 0 |
| 8 | 0.055556 | 11.8 | 15.5 | 11 | 1.8 | 100 |
| 9 | 0 | 0.4 | 22.9 | 26 | 7.5 | 22.22222 |
| 10 | 0.055556 | 30.4 | 10.4 | 1 | 27.2 | 50 |
| 11 | 0 | 21.1 | 12.3 | 1 | 30.6 | 0 |
| 12 | 0 | 1.8 | 9.8 | 20 | 5.6 | 83.33333 |
| 13 | 0 | 7.7 | 20.6 | 8 | 4.5 | 77.77778 |
| 14 | 0 | 0.2 | 13.9 | 1 | 97.1 | 0 |
| 15 | 0 | 0.6 | 24.9 | 1 | 32.8 | 0 |
| 16 | 0 | 16.6 | 7.3 | 1 | 46.3 | 11.11111 |
| 17 | 0 | 2 | 7.3 | 1 | 20.1 | 55.55556 |
| 18 | 0.111111 | 3.4 | 13.3 | 26 | 8.6 | 16.66667 |
| 19 | 0.388889 | 3.4 | 14 | 17 | 10.3 | 16.66667 |
| 20 | 0.555556 | 11.2 | 22 | 17 | 15.7 | 0 |
| 21 | 0.944444 | 18.1 | 31.3 | 1 | 33.5 | 0 |
| 22 | 0.722222 | 11.9 | 20.9 | 1 | 11 | 77.77778 |
| 23 | 0.055556 | 7.5 | 23.7 | 1 | 29.9 | 22.22222 |
| 24 | 0 | 8.1 | 23 | 1 | 25.4 | 16.66667 |
| 25 | 0 | 6.1 | 22.6 | 1 | 31 | 0 |
| 26 | 0 | 13.3 | 14.7 | 1 | 28 | 38.88889 |
| 27 | 0 | 17.9 | 17.6 | 11 | 3.8 | 66.66667 |
| 28 | 0.611111 | 19.8 | 13.8 | 14 | 6 | 16.66667 |
| 29 | 0.055556 | 0.2 | 24.6 | 11 | 3 | 0 |
| 30 | 0.722222 | 20.9 | 13.4 | 20 | 16.4 | 44.44444 |
| ... | ... | ... | ... | ... | ... | ... |

602 604 606 608 610 612 614

**Figure 6**

18

702
**All**
Count = 276
Mean = 0.25
SD = 0.31

700

704
**VTD<10.2**
Count = 158
Mean = 0.127
SD = 0.21

706
**VTD>=10.2**
Count = 118
Mean = 0.41
SD = 0.35

708
**VTD<2.1**
Count = 67
Mean = 0.055
SD = 0.15 R0

**Invisible**

710
**VTD>=2.1**
Count = 91
Mean = 0.18
SD = 0.23

720
**STE<8**
Count = 60
Mean = 0.25
SD = 0.29

722
**STE>=8**
Count = 58
Mean = 0.59
SD = 0.32

712
**STE<8**
Count = 56
Mean = 0.13
SD = 0.17 R1

**Invisible**

714
**STE>=8**
Count = 35
Mean = 0.26
SD = 0.29

724
**VSD<23.9**
Count = 55
Mean = 0.22
SD = 0.27

726
**VSD>=23.9**
Count = 5
Mean = 0.57
SD = 0.31 R7

**Visible**

728
**SSP<66.6**
Count = 44
Mean = 0.65
SD = 0.29 R8

**Visible**

730
**SSP>=66.6**
Count = 14
Mean = 0.37
SD = 0.35 R4

**Indeterminate**

716
**SSP<16.6**
Count = 8
Mean = 0.51
SD = 0.36 R6

**Visible**

718
**SSP>=16.6**
Count = 27
Mean = 0.19
SD = 0.23 R3

**Invisible**

732
**SSE<47.6**
Count = 43
Mean = 0.17
SD = 0.23 R2

**Invisible**

734
**SSE>=47.6**
Count = 12
Mean = 0.4
SD = 0.32 R5

**Indeterminate**

**Figure 7**

800

EP 2 713 616 A1

| Class number | PVR boundary conditions | PVR | PVR decision |
|---|---|---|---|
| 0 | VTD<2.1 | 0.055 | Invisible (PVR<=0.19) |
| 1 | VTD<10.2,VTD>=2.1,STE<8 | 0.13 | Invisible (PVR<=0.19) |
| 2 | VTD>=10.2,STE<8,VSD<23.9,SSE<47.6 | 0.17 | Invisible (PVR<=0.19) |
| 3 | VTD<10.2,VTD>=2.1,STE>=8,SSP>=16.6 | 0.19 | Invisible (PVR<=0.19) |
| 4 | VTD>=10.2,STE>=8,SSP>=66.6 | 0.37 | Indeterminate (0.19<PVR<0.5 ) |
| 5 | VTD>=10.2,STE<8,VSD<23.9,SSE>=47.6 | 0.40 | Indeterminate (0.19<PVR<0.5 ) |
| 6 | VTD<10.2,VTD>=2.1,STE>=8,SSP<16.6 | 0.51 | Visible (PVR>=0.5) |
| 7 | VTD>=10.2,STE<8,VSD>=23.9 | 0.57 | Visible (PVR>=0.5) |
| 8 | VTD>=10.2,STE>=8,SSP<66.6 | 0.65 | Visible (PVR>=0.5) |

**Figure 8**

Figure 9

1000
┌─────────────────────────────┐
│ Select operational video sequence, and │
│ encode if required, and select PES │
│ model │
└─────────────────────────────┘
              │
1002          ▼
┌─────────────────────────────┐
│ Analyse encoded bitstream of the │
│ operational video sequence to │
│ determine content-independent │
│ properties for each transmission unit │
└─────────────────────────────┘
              │
1004          ▼
┌─────────────────────────────┐
│ Analyse uncompressed operational │
│ video sequence to determine content- │
│ dependent properties for each │
│ transmission unit │
└─────────────────────────────┘
              │
1006          ▼
┌─────────────────────────────┐
│ Apply content-dependent properties and │
│ content-independent properties to the │
│ selected PES model to determine a │
│ predicted visibility rating (PVR) for each │
│ transmission unit │
└─────────────────────────────┘
              │
1008          ▼
┌─────────────────────────────┐
│ Prioritise transmission units for FEC in │
│ dependence on relative PVR values │
└─────────────────────────────┘
              │
1010          ▼
┌─────────────────────────────┐
│ Apply FEC to prioritised transmission │
│ units │
└─────────────────────────────┘
              │
1012          ▼
┌─────────────────────────────┐
│ Output FEC protected video sequence │
└─────────────────────────────┘

**Figure 10**

1100

| Frame | Type | slice | VTD | SSE | SSP | STE | VSD | PVR | PVR Rank | FEC |
|-------|------|-------|-------|-------|-------|-----|-------|------|----------|-----|
| 167 | P | 1 | 17.73 | 12.35 | 77.78 | 26 | 12.35 | 0.37 | 1 | 0 |
| 167 | P | 2 | 16.84 | 4.07 | 72.22 | 26 | 24.23 | 0.37 | 1 | 0 |
| 167 | P | 3 | 10.91 | 4.01 | 61.11 | 26 | 15.03 | 0.65 | 2 | 1 |
| 167 | P | 4 | 11.77 | 3.02 | 55.56 | 26 | 16.08 | 0.65 | 2 | 1 |
| 167 | P | 5 | 11.3 | 2.96 | 50 | 26 | 20.82 | 0.65 | 2 | 1 |
| 167 | P | 6 | 10.39 | 2.72 | 44.44 | 26 | 24.46 | 0.65 | 2 | 1 |
| 167 | P | 7 | 11.05 | 2.53 | 38.89 | 26 | 25.31 | 0.65 | 2 | 1 |
| 167 | P | 8 | 12.15 | 2.47 | 33.33 | 26 | 20.07 | 0.65 | 2 | 0 |
| 167 | P | 9 | 12.29 | 2.72 | 27.78 | 26 | 12 | 0.65 | 2 | 0 |
| 167 | P | 10 | 11.44 | 2.59 | 22.22 | 26 | 8.95 | 0.65 | 2 | 0 |
| 167 | P | 11 | 9.11 | 2.53 | 16.67 | 26 | 8.15 | 0.19 | 0 | 0 |

1102  1104  1106  1108  1110  1112  1114  1116  1118  1120  1122

**Figure 11**

**Figure 12**

EP 2 713 616 A1

Figure 13

Europäisches
Patentamt

European
Patent Office

Office européen
des brevets

# EUROPEAN SEARCH REPORT

Application Number

EP 12 25 0155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TING-LAN LIN ET AL: "A Versatile Model for Packet Loss Visibility and its Application to Packet Prioritization", IEEE TRANSACTIONS ON IMAGE PROCESSING, IEEE SERVICE CENTER, PISCATAWAY, NJ, US, vol. 18, no. 3, 1 March 2010 (2010-03-01), pages 722-735, XP011298537, ISSN: 1057-7149 * abstract; tables 1,3,4 * * page 732, left-hand column * * paragraph [00IV] - paragraph [000V] * ----- | 1-5 | INV. H04N7/26 |
| X | MASALA E ET AL: "Optimized H.264 Video Encoding and Packetization for Video Transmission Over Pipeline Forwarding Networks", IEEE TRANSACTIONS ON MULTIMEDIA, IEEE SERVICE CENTER, PISCATAWAY, NJ, US, vol. 11, no. 5, 1 August 2009 (2009-08-01) , pages 972-985, XP011346624, ISSN: 1520-9210, DOI: 10.1109/TMM.2009.2021784 * paragraph [III.A] * ----- | 1-5 | TECHNICAL FIELDS SEARCHED (IPC) H04N |

The present search report has been drawn up for all claims

| Place of search | Date of completion of the search | Examiner |
|---|---|---|
| Munich | 30 January 2013 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QI QU et al.** An Adaptive Motion-Based Unequal Error Protection Approach for Real-Time Video Transport Over Wireless IP Networks. *IEEE Transactions on Multimedia,* October 2006, vol. 8 (5), 1033-1044

- **PASCAL FROSSARD et al.** AMISP: A Complete Content-Based MPEG-2 Error-Resilient Scheme. *IEEE Transactions on Circuits and Systems for Video Technology,* September 2001, vol. 11 (9